# EUROPEAN PATENT SPECIFICATION

(11) **EP 0 626 667 B1**
(45) Date of publication and mention of the grant of the patent: **04.06.1997**
(21) Application number: 94202362.3
(22) Date of filing: 11.12.1987
(51) Int. Cl.: G09F 3/04, G09F 3/02, B29C 49/24

(54) **Application of labels to plastic containers**
Anbringen von Etiketten auf Plastikbehältern
Application d'Etiquettes sur des conteneurs en matière plastique

(30) Priority: 29.12.1986 US 947144
(43) Date of publication of application: 30.11.1994
(62) Divisional of application: 87310919.3
(73) Proprietor: OWENS-ILLINOIS PLASTIC PRODUCTS INC., Toledo, Ohio 43666 (US)
(72) Inventor: Heider, James Elmer, Bowling Green, OH 43402 (US)
(74) Representative: W.P. Thompson & Co.

(56) References cited:
- EP-A- 0 143 621
- WO-A-86/04547
- FR-A- 2 284 531
- US-A- 3 108 850
- US-A- 3 207 822
- US-A- 3 401 475
- US-A- 4 049 147
- US-A- 4 273 816
- US-A- 4 410 582
- US-A- 4 585 679

## Description

This invention relates to labels for plastic containers, to the application of labels to plastic containers, particularly by in-mould labelling during the blow moulding of the container, and to plastic containers having labels applied thereto.

In the use of plastic containers, it becomes necessary to apply labels. It has been found that applying the labels during the moulding process reduces costs of manufacture and produces an attractive container. More specifically, when a hollow parison or preform is expanded against the surface of the mould having a label on a side wall of the mould cavity so that when the plastic is expanded, it causes an adhesive on the label to be heated and thereby adhere the label to the container. One common type of label that is used is a paper label. However, the use of such a label has inherent problems in that when the plastic container cools, the plastic and paper have different rates of shrinkage and, as a result, the paper wrinkles and stresses occur in the adhesive. Another problem with the use of paper labels is that any rejected containers cannot be reprocessed until the paper label is removed. It has there fore been common to discard the entire container or, at most, cut off the neck of the container and discard the remainder.

US- A- 3 108 850 and US- A- 3 207 822 discuss the use of plastic labels without adhesive. US- A-3 108 850 is considered the nearest prior art for the presently claimed invention, and contemplates the use of an insulator comprising a paper layer or plastic layer between the mould and the plastic parison. The insulating part is connected to the label by either a temporary readily strippable connection for quick removal or a relatively permanent connection so that the insulation remains with the label on the completed container to form the decorated outer surface. US-A-3 207 822 contemplates a plastic label made of a material similar to that used in making the bottle that becomes bonded to the container by the heat and pressure of blowing the container. US-A-3 207 822 also contemplates coarsely roughening the surface of the mould to facilitate bonding of the label to the container. As far as is known to the present Applicant, such efforts were not commercially successful and, at the present time, it is believed that adhesive is used in all labels wherein the labels are applied by the in-moulding process.

Reference is also made to US-A-4 049 147, which discloses a tubular two-layer label (having a foamed layer and an unfoamed layer) which is heat-shrunk onto a glass bottle to reduce shattering.

Accordingly, there is need for providing a blown plastic container which has a label applied in a reliable manner by the in-mould labelling process that avoids the use of adhesive; which is low in cost; which results in a container that is readily recyclable; and which produces an attractive appearance offering various aesthetic effects.

According to the present invention there is provided a method of labelling a plastics container which comprises positioning a multi-layer label in a mould cavity, positioning a hot parison at moulding temperature adjacent the cavity, and expanding the parison by fluid pressure against the side wall of the mould to form a container and bond the inner layer of the label to the outer surface of the container, wherein the multi-layer label is a non-tubular multi-layer label consisting of only two coextruded layers comprising:
as the inner layer a non-cellular plastic layer; and
as the outer layer a cellular plastic layer compatible with the non-cellular layer without adhesive and bonded thereto.

According to the patent application, the cellular layer is an intermediate layer and there is also an outer non-cellular layer compatible with the intermediate cellular layer and heat bonded thereto. For the sake of convenience, the present invention is hereinafter particularly described with reference to this preferred embodiment, but is in no manner limited thereto.

The present invention also provides a plastic container having a multilayer label applied by in-mould labelling during the blow moulding of the plastic container wherein the multilayer label and container are as hereabove defined.

The cellular and non-cellular layers are usually plastic, particularly comprising olefin polymers. Preferably the container comprises polyethylene.

Desirably, the major portion of the thickness of the label comprises the cellular layer. Preferably the cellular layer has a roughness surface adjacent the inner layer providing paths for the escape of air which could become entrapped between the container and label during moulding.

A particular embodiment of the present invention comprises a multilayer label, the inner non-cellular layer having a thickness of about 0.0127 mm (0.5 mils) and the cellular layer has a thickness of about 0.127 mm (5 mils).

For the sake of convenience, the present invention will be hereinafter described with reference to a three layer label but the present invention only uses two layers, as claimed.

The present invention will now be more particularly described with reference to the accompanying drawings, in which:-
Fig. 1 is a side elevational view of a plastic container embodying the present invention; and
Fig. 2 is a fragmentary sectional view on an enlarged scale taken along the line 2-2 in Fig. 1, but showing three rather than two layers.

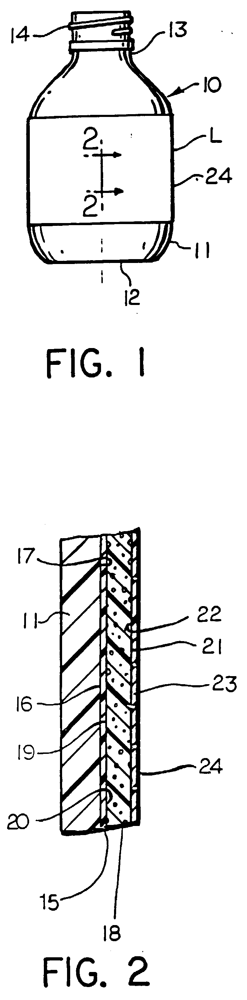

Referring to Figs. 1 and 2, the plastic container embodying the invention is shown as comprising a hollow container 10 having a side wall 11, a bottom wall 12 and a neck 13 with a thread 14 thereon. The container is made by conventional blow moulding techniques wherein a hollow preform or parison at the blow moulding temperature is enclosed in a hollow mould which has a label suitably held against a surface of the cavity of the mould by, for example, vacuum, and the parison is expanded or blown outwardly against the confines of the mould so that the label is bonded to the outer surface of the side wall 11 of the resultant container.

Referring to Fig. 2, the label L comprises an inner non-cellular (preferably plastic) layer 15 which is heat bonded at its inner surface 16 to the outer surface 17 of the wall 11 of the container; an intermediate cellular (preferably plastic) layer 18 which has an inner surface 19 bonded to the outer surface 20 of the inner layer 15 and an outer surface 21 which is heat bonded to the inner surface 22 of an outer non-cellular (preferably plastic) layer 23. The outer surface 24 of the outer layer 23 is formed with suitable indicia such as printing to produce identification as well as desired aesthetic effects. This outer layer is absent according to the presently claimed invention.

In order to provide the heat bonding desired to produce the container without the use of adhesives, the various layers must be compatible at their contacting surfaces, that is, they must be heat bondable.

The label L is made by coextrusion, as is well known in the art, during which the preferably uniformly thick layers 15,18 23 are heat bonded to one another.

The resultant label L has a thin inner layer and a relatively thick outer layer 18 (though an outer layer is additionally shown).

Furthermore, preferably the major portion of the total thickness of the label L comprises the intermediate cellular layer 18. In a typical example, the total thickness of label L might be 0.1524 mm (6 mils) and the inner having a thickness of 0.0127 mm (0.5 mil). In addition, the inner surface 17 of the inner layer 15 preferably is roughened in order to avoid the formation of air bubbles and ensure a proper bond with the wall 11.

In a preferred form, the labels are applied to containers made of olefin plastics and the layers of the labels are also made of olefin plastics.

It has been found that when the labels L are applied to plastic containers by conventional in-moulding techniques, the inner layer is reheated and adheres to the bottle surface without the use of adhesives since it is compatible with the container and is very thin resulting in a very low specific heat. However, it is insulated from the bulk or mass of the total label by the foam or cellular layer 18. The low specific heat of the inner layer together with the insulating characteristis of the intermediate layer allows the surface of the inner layer to rapidly heat and melt bond to the outer surface of the container. The cellular layer also permits the inner surface of the label to reheat to the desired temperature for adhesion without distorting the label.

This may be contrasted to labels that comprise non-cellular cross sections wherein it is very difficult at normal blow moulding temperatures to reheat the inner surface to a point at which complete bonding will occur.

The cellular foam layer is designed not only to insulate the inner surface of the inner layer but also to provide bulk or stiffness to the label without adding to the weight of the label. The resultant stiffness permits better handling in the mechanisms with are utilized to insert the label within the mould cavity.

Furthermore, the cellular layer produces a fine roughness on the inner surface of the inner layer providing paths for escape of air which could become entrapped between the container and label during the blow moulding.

Tests have shown that complete adhesion between the label and container occur.

The inner layer is preferably of a material which has a melting point like that of the container. The outer layer preferably is made of material that has characteristics suitable for printing and background. An overlayer of varnish can be provided over the printing on the outer layer. Alternatively, a metallic film coating can be applied on the outer surface of the outer layer before printing to provide a metallic background for the printing.

As indicated above, the polymeric materials respective and independently contemplated for cellular layer 18 and non-cellular layer 15 are olefin polymers. Each of these polymeric layers can have as the predominant polymeric moiety a polymer of an olefin, preferably an olefin having 2-4 carbons, or mixtures thereof. For example, the predominant moiety will be a polymer of ethene, propene, butene (particularly butene-1), or mixtures thereof, more commonly referred to as a polymer of ethylene, propylene or butylene. The polymers include homopolymers, copolymers of these olefins with other copolymerizable monoethylenically unsaturated monomers, wherein the olefin in the copolymerization is such that the moiety thereof in the final copolymer, that is the ethylene, propylene or butylene moiety, is at least about 60% by weight, and polymeric blends, or admixtures, wherein the resulting polymeric blend is at least about 60% by weight of a polymerized olefin moiety, e.g., at least about 60% of an ethylene moiety in the blend. The minor amounts, i.e., less than about 40% of the other moiety of material employed, are such as to supplement and compliment the basic properties of the olefin polymer and this applies whether other moieties are introduced by way of a polymer blend, or admixture, or by way of a copolymerized monomer. These other moieties, whether supplied by blending another polymer with a homopolymerized olefin, e.g., homopolymerized ethene, (ethylene homopolymer), or by copolymerization therewith should not be such as to significantly interfere with the foamable, heat sealable, extrudable characteristics of the base olefin polymer and should be compatible, i.e., miscible with it.

Exemplary olefin homopolymers are ethylene, propylene and butylene homopolymers, with the former being especially preferred, and blends of these homopolymers. The terms polyethylene, polypropylene and polybutylene are used herein to include those materials recognized and sold commercially under those names, even though those materials, strictly and technically, may be viewed by some to be a blend, or copolymer, since the material may include small amounts, typically less than about 5%, e.g. 0.5-3% be weight of another polymeric moiety. For example, polyethylene is sold and recognized by that name when in fact it may be produced by copolymerization with 1-2 percent by weight of hexene, or butadiene, or may, by analysis, show several percent, e.g., 3-5% of vinyl acetate moiety. For practical purposes however these materials consist of polyethylene.

The foregoing description generally describes the composition of the polymeric portion of the cellular layer 18 and non-cellular film 15, it being understood that the layers need not be of the same polymeric composition. It will, of course, be apparent that suitable adjuvants can be present in these layers if desired. Thus, for example, in addition to the polymeric material, the respective layers can include, for example, pigments or stabilizers. Generally, excellent results will be obtained be selecting a polymeric composition for cellular layer 18 which has a melt index or melt flow of less than 5, for example, between about 0.1 to 5 most desirebly about 0.2 to 1 and the polymeric material selected from the non-cellular layer 15 will have a melt index or melt flow of less than about 10. The preferred material for both the cellular layer 18 and the non-cellular layer 15 is polyethylene, which includes low density polyethylene, for example, polyethylene having a density of less than 0.925 grams/cc, generally in the range of about 0.910 to about 0.925, high density polyethylene, for example, that having a density greater than about 0.941, typically about 0.941 to about 0.965, medium density polyethylene, and blends thereof. As regards the cellular layers, the density specified is prior to foaming. The foamed density of cellular layer is about 0.40 to 0.48 grams/cc (25 to 30 lbs/ft.³) and the density of the composite laminate is less than about 0.56 to 0.64 grams/cc (35 to 40 lbs/ft.³).

While a sheet of stock material of the composite structure for use herein can be formed by various techniques, it is generally preferred to employ extrusion technology. This extrusion technology may in general take either of two conventional forms, one of which is extrusion coating and the other of which is the use of co-extrusion technology. The latter technique, however, is used because of the apparent ability to form lower density composite structures. In the co-extrusion technique, while a slit die may be employed, the preferred practice is to employ an extrusion die which is possessed of an annular, circular opening and the composite structure is initially formed as a tubular shape by what is referred to in the art as a "blown bubble" technique. These types of co-extrusion die is set forth in SPE Journal, November 1969, Vol.25, page 20 entitled, "Co-Extrusion of Blown Film Laminates".

In this known co-extrusion technique, the circular opening is fed from two independent extruders and, in this particular instance, the extruder supplying the foamable material, intended to form cellular layer 18, preferably will feed the die so that this material forms the internal portion of the tubular extrusion. The extruder feeding the material intended to form non-cellular layer 15 will be fed to the die so as to form the internal or external portion of the tubular shape. The tubular member issuing from the extruder is blown into a bubble by conventional "bubble" forming techniques, including air cooling of the external surface thereof, and is then drawn through the nip of two juxtaposed rollers wherein the tubular member is compressed to form a flattened tube.

Suitable conventional foaming or blowing agents are employed to produce foaming and the cellular structure results, just as the extrudate leaves the die. This flattened tube is then contacted with cutting knives which slit the flattened tubular member along its edges (machine direction) so as to form a sheet or film of substantially uniform width. This sheet or film, which is at this point actually a sheet of two superimposed composite structures, for use herein, is separated into two independent sheets and wound onto independent winding wheels, which provides the stock of the heat bondable composite structure for use herein.

Although the invention has been described in connection with the blow moulded containers, it is also applicable to containers made from preforms by differential pressure as, for example, thermoforming of containers from flat or shaped preforms.

## Claims

1. A method of labelling a plastics container (10) which comprises positioning a multi-layer label (L) in a mould cavity, positioning a hot parison at moulding temperature adjacent the cavity, and expanding the parison by fluid pressure against the side wall of the mould to form a container (10) and bond the inner layer (15) of the label to the outer surface (16) of the container (10), wherein the multi-layer label (L) is a non-tubular multi-layer lable (L) consisting of only two coextruded layers comprising:
as the inner layer a non-cellular plastic layer (15); and
as the outer layer a cellular plastic layer (18) compatible with the non-cellular layer (15) without adhesive and bonded thereto.

2. A method as claimed in claim 1, wherein the label is heat bondable at moulding temperature to the outer surface of the plastic container (10).

3. A method as claimed in claim 1 or claim 2, wherein the cellular plastic layer (18) is heat bonded to the non-cellular plastic layer (15).

4. A method as claimed in any of calims 1 to 3, wherein the cellular layer (18) comprises the major portion of the total thickness of the lable (4).

5. A method as claimed in any of claims 1 to 4, wherein said layers comprise a material selected from the group of olefins.

6. A method as claimed in any of claims 1 to 5, wherein the layers (15, 18) of the label comprise polyethylene.

7. A method as claimed in any of claims 1-6, wherein the cellular layer (18) has a roughened surface (20) adjacent the non-cellular layer (15) providing paths for escape of air which could become entrapped between the container (10) and label during moulding.

8. A method as claimed in any of claims 1 to 7, wherein the non-cellular layer has thickness of about 0.0127mm (0.5 mil) and the cellular layer (18) has a thickness of about 0.127mm (5 mils).

9. A plastics container (10) having a multilayer label (L) adapted by a method as claimed in any of claims 1 to 8.

10. A plastics container (10) as claimed in claim 9, wherein the container comprises a material selected from the group of olefins.

11. A plastics container (10) as claimed in claim 10, wherein the container comprises polyethylene.

## Patentansprüche

1. Verfahren zum Etikettieren eines Plastikbehälters (10), welches das Positionieren eines Mehrschichtetiketts (L) in einem Formhohlraum, das Positionieren eines heißen Vorformlings bei Formtemperatur angrenzend an den Hohlraum und das Expandieren des Vorformlings durch Fluiddruck gegen die Seitenwand der Form umfaßt, um einen Behälter (10) zu formen und die innere Schicht (15) des Etiketts mit der äußeren Oberfläche (16) des Behälters (10) zu verbinden, wobei das Mehrschichtetikett (L) ein nichtröhrenförmiges Mehrschichtetikett (L) ist bestehend aus nur zwei koextrudierten Schichten umfassend: als die innere Schicht eine nichtzellulare Plastikschicht (15) und als die äußere Schicht eine mit der nichtzellularen Schicht (15) kompatible zellulare Plastikschicht (18), ohne Klebstoff und damit verbunden.

2. Verfahren nach Anspruch 1, wobei das Etikett bei Formtemperatur mit der äußeren Oberfläche des Plastikbehälters (10) verschweißbar ist.

3. Verfahren nach Anspruch 1 oder Anspruch 2, wobei die zellulare Plastikschicht (18) mit der nichtzellularen Plastikschicht (15) verschweißt ist.

4. Verfahren nach einem der Ansprüche 1 bis 3, wobei die zellulare Schicht (18) den größten Teil der Gesamtdicke des Etiketts (4) ausmacht.

5. Verfahren nach einem der Ansprüche 1 bis 4, wobei genannte Schichten ein aus der Gruppe der Olefine ausgewähltes Material umfassen.

6. Verfahren nach einem der Ansprüche 1 bis 5, wobei die Schichten (15, 18) des Etiketts Polyethylen umfassen.

7. Verfahren nach einem der Ansprüche 1 bis 6, wobei die zellulare Schicht (18) angrenzend an die nichtzellulare Schicht (15) eine aufgerauhte Oberfläche (20) hat, die Wege zum Entweichen von Luft vorsieht, welche beim Formen zwischen Behälter (10) und Etikett eingeschlossen werden könnte.

8. Verfahren nach einem der Ansprüche 1 bis 7, wobei die nichtzellulare Schicht eine Dicke von etwa 0,0127 mm (0,5 mil) und die zellulare Schicht (18) eine Dicke von etwa 0,127 mm (5 mils) hat.

9. Plastikbehälter (10) mit einem durch ein Verfahren nach einem der Ansprüche 1 bis 8 angepaßten Mehrschichtetikett (L).

10. Plastikbehälter (10) nach Anspruch 9, wobei der Behälter ein aus der Gruppe der Olefine ausgewähltes Material umfaßt.

11. Plastikbehälter (10) nach Anspruch 10, wobei der Behälter Polyethylen umfaßt.

## Revendications

1. Une méthode pour étiqueter un conteneur en plastique (10) qui comprend positionner une étiquette à couches multiples (L) dans une cavité d'un moule, positionner une ébauche chaude à température de moulage adjacente à la cavité, et causer l'expansion de l'ébauche par pression de fluide contre la paroi latérale du moule pour former un conteneur (10) et fixer la couche interne (15) de l'étiquette à la surface externe (16) du conteneur (10), selon laquelle l'étiquette à couches multiples (L) est une étiquette à couches multiples non tubulaire (L) consistant en deux couches co-extrudées seulement comprenant en qualité de couche interne, une couche non cellulaire en plastique (15); et en qualité de couche externe, une couche cellulaire en plastique (18) compatible avec la couche non cellulaire (15) sans adhésif et fixée à celle-ci.

2. Une méthode telle que revendiquée dans la revendication 1, selon laquelle l'étiquette est thermiquement fixable à température de moulage à la surface externe du conteneur en plastique (10).

3. Une méthode telle que revendiquée dans la revendication 1 ou dans la revendication 2, selon laquelle la couche cellulaire en plastique (18) est thermiquement fixée à la couche non cellulaire en plastique (15).

4. Une méthode telle que revendiquée dans l'une quelconque des revendications 1 à 3, selon laquelle la couche cellulaire (18) comprend la majeure partie de l'épaisseur totale de l'étiquette (4).

5. Une méthode telle que revendiquée dans l'une quelconque des revendications 1 à 4, selon laquelle lesdites couches comprennent une matière sélectionnée à partir du groupe d'oléfines.

6. Une méthode telle que revendiquée dans l'une quelconque des revendications 1 à 5, selon laquelle les couches (15,18) de l'étiquette comprennent du polyéthylène.

7. Une méthode telle que revendiquée dans l'une quelconque des revendications 1 à 6, selon laquelle la couche cellulaire (18) a une surface rendue rugueuse (20) adjacente à la couche non cellulaire (15) foumissant des passages pour l'échappement de l'air qui pourrait être piégé entre le conteneur (10) et l'étiquette pendant le moulage.

8. Une méthode telle que revendiquée dans l'une quelconque des revendications 1 à 7, selon laquelle la couche non cellulaire a une épaisseur d'environ 0,0127 mm (0,5 mil) et la couche cellulaire (18) a une épaisseur d'environ 0,127 mm (5 mils).

9. Un conteneur en plastique (10) ayant une étiquette à couches multiples (L) adaptée par une méthode telle que revendiquée dans l'une quelconque des revendications 1 à 8.

10. Un conteneur en plastique (10) tel que revendiqué dans la revendication 9, dans lequel le conteneur comprend une matière sélectionnée à partir du groupe d'oléfines.

11. Un conteneur en plastique (10) tel que revendiqué dans la revendication 10, dans lequel le conteneur comprend du polyéthylène.
